# EUROPÄISCHE PATENTSCHRIFT

(11) **EP 1 404 534 B1**
(45) Veröffentlichungstag und Bekanntmachung des Hinweises auf die Patenterteilung: **13.04.2005**
(21) Anmeldenummer: 02740752.7
(22) Anmeldetag: 26.06.2002
(51) Int. Cl.: B60B 21/06

(54) **FAHRRAD-HINTERRAD**
REAR WHEEL OF A BICYCLE
ROUE ARRIERE DE BICYCLETTE

(30) Priorität: 05.07.2001 DE 10132090
(43) Veröffentlichungstag der Anmeldung: 07.04.2004
(73) Patentinhaber: Canyon Bicycles GmbH, 56073 Koblenz (DE)
(72) Erfinder: ARNOLD, Roman, 56068 Koblenz (DE); SCHEFFER, Lutz, 75181 Pforzheim (DE); SMOLIK, Hans-Christian, 84163 Freinberg-Marklkofen (DE)
(74) Vertreter: von Kirschbaum, Alexander, Dipl.-Ing.
(86) Internationale Anmeldenummer: PCT/EP2002/007047
(87) Internationale Veröffentlichungsnummer: WO 2003/004290

(56) Entgegenhaltungen:
- EP-A- 0 494 277
- WO-A-98/09829
- FR-A- 2 792 250
- US-A- 6 145 937

## Beschreibung

Die Erfindung bezieht sich auf ein Fahrrad-Hinterrad mit einer von Speichen außermittig gehaltenen Felge.

Fahrrad-Hinterräder für Fahrräder mit einer Kettenschaltung weisen eine Achse mit einer Nabe und daran angrenzend einen Zahnkranzsatz aus bis zu 10 Zahnrädern auf. Zur Befestigung der Speichen sind zwei Nabenflansche an beiden axialen Enden der Nabe vorgesehen. Die Hinterradachse besteht also aus der Nabe mit den beiden Nabenflanschen und dem daran angrenzenden Zahnkranzsatz. Wird die Felge durch die Speichen mittig zwischen den beiden Nabenflanschen gehalten, so stehen die Speichen beider Nabenflansche symmetrisch und unter gleichem Winkel nach außen ab, jedoch wird die Felge nicht in der Mitte der Hinterradachse gehalten, sondern außermittig. Aus dieser Unsymmetrie ergeben sich unerwünschte Effekte bezüglich des Laufverhaltens des Fahrrades. Um die Felge ungefähr in der Hinterachsmitte anzuordnen, können für die achsäußeren Speichen längere und für die achsmittigen Speichen kürzere Speichenlängen gewählt werden, so dass die Felge nicht mittig zwischen den beiden Nabenflanschen, sondern zur Achsmitte verrückt eingespannt ist. Die annähernd in einer Radialebene stehenden kürzeren achsmittigen Speichen können jedoch nur noch kleine Seitenkräfte aufnehmen, ohne zu reißen.

Aus EP 0 494 277 ist ein Fahrrad-Hinterrad bekannt, bei dem die Befestigungsmittelebene der Speichen an der Felge nicht in der Feigenmitte, sondern seitlich versetzt der Feigenmitte liegt. Hierdurch können die Speichen beider Nabenflansche symmetrischer zur Nabenmittelebene angeordnet werden, wodurch, trotz seitlichem Versatzes der Felge, ein besseres Federungs- und Führungsverhalten der Speichen sichergestellt ist. Zur Versteifung weist die Felge radinnenseitig des Felgenbettes eine durch Hohlkammerwände begrenzte Hohlkammer auf, in die die Speichenenden münden und an einer Wand der Hohlkammer seitlich versetzt zur Felgenbettmitte befestigt sind. Eine kastenförmige Form des Felgenkörpers ist aerodynamisch ungünstig. Zur Verringerung des Luftwiderstandes der Felge laufen die seitlichen Hohlkammerwände zur Radmitte hin aufeinander zu, so dass sich der Felgenkörper zur Radmitte hin verjüngt. Dadurch wird eine aerodynamische Form der Felge realisiert, wobei jedoch gleichzeitig der seitliche Versatz zur Felgenbettmitte gezwungenermaßen auf ein geringes Maß reduziert wird, was insbesondere bei schmalen Felgen den seitlichen Versatz der Felge auf wenige Millimeter verringert.

Aufgabe der Erfindung ist es daher, den seitlichen Versatz der Speichenbefestigungsebene zu vergrößern und die Aerodynamik der Felge zu verbessern.

Diese Aufgabe wird erfindungsgemäß mit den Merkmalen des Anspruchs 1 gelöst.

Bei dem erfindungsgemäßen Fahrrad-Hinterrad ragt eine den Speichenenden benachbarte seitliche Hohlkammerwand seitlich über das Felgenbett hinaus, so dass der seitliche Versatz der Speichenverankerungen größer als ein Viertel der Felgeninnenbreite ist und die Verankerungsebene ungefähr im Randbereich des Felgenbettes liegt. Der Felgenkörper wird also im Bereich der Hohlkammer an einer Seite ausgebeult, wodurch gleichzeitig der seitliche Versatz der Speichenbefestigungsebene zu der Felgenmittelebene erheblich vergrößert werden kann. Hierdurch wird einerseits erreicht, dass auch bei Zahnradkränzen mit einer Vielzahl von Zahnrädern das Felgenbett ungefähr in der Hinterachsmittelebene liegt, während gleichzeitig ein jedenfalls annähernd symmetrisches Einspeichen der Felge sichergestellt ist. Wie Versuche ergeben haben, wird die Aerodynamik der sich zur Radmitte hin verjüngenden Felgenkörpers durch die Ausbeulung der einen seitlichen Hohlkammerwand nicht verschlechtert, so dass die Vergrößerung des seitlichen Speichenversatzes nicht auf Kosten der Aerodynamik geht. Erst durch die Anordnung der Verankerungsebene ungefähr auf Höhe des Felgenhornrandes ist auch bei sehr schmal gehaltenen Felgen ein nennenswerter seitlicher Versatz der Felge realisierbar.

Gemäß einer bevorzugten Ausgestaltung liegt der Abstand der Verankerungsebene zum Rand des Felgenbettes unter 2,0 mm. Mit dem Rand des Felgenbettes ist das nach innen zur Felgenmittelebene gerichtete Felgenhorn gemeint, durch das die Öffnungsbreite der Felge definiert wird.

Vorzugsweise ragen die Verankerungselemente vollständig in die Hohlkammer hinein. Als Verankerungselemente können beispielsweise Gewindemuttern dienen, die auf die ein entsprechendes Außengewinde aufweisenden Speichenenden aufgeschraubt werden. Aus dem Stand der Technik bekannte Gewindemuttern ragen radial in Richtung Nabe aus der Felge heraus und erhöhen dadurch den Luftwiderstand. Durch die Verlagerung des gesamten Verankerungselementes in die Hohlkammer ragt das Verankerungselement nicht mehr aus der Felge heraus. Hierdurch wird der Luftwiderstand des Hinterrades reduziert. Durch die vollständige Verlagerung der Verankerungselemente in die Hohlkammer sind diese ferner gegen korrosionsträchtige Umwelteinflüsse besser geschützt, wodurch die Haltbarkeit des Hinterrades erhöht wird.

Gemäß einer bevorzugten Ausgestaltung weist der Felgenbettboden Öffnungen für den Zugriff auf die Speichenenden und die Verankerungselemente in der Hohlkammer auf. Durch die Öffnungen in dem Felgenbettboden kann das Verankerungselement auf das in die Hohlkammer eingesteckte Speichenende aufgebracht und ggf. auf die gewünschte Speichenspannung festgezogen werden. Durch die Öffnungen in dem Felgenbettboden wird einerseits eine gute Zugänglichkeit zu den Verankerungselementen gewährleistet. Nach der Installation aller Speichen werden die Felgenbettboden-Öffnungen durch ein Felgenband oder durch andere geeignete Mittel geschlossen und der Schlauch und der Reifen auf das Felgenbett aufgezogen. Auf diese Weise ist einerseits eine gute Zugänglichkeit der Verankerungselemente sichergestellt, andererseits jedoch ein wasserdichter Verschluss der Öffnungen durch den Schlauch und den Reifen sichergestellt.

Gemäß einer bevorzugten Ausgestaltung sind die felgenseitigen Enden der Speichen verdickt gegenüber dem übrigen Speichenbereich. Die Verdickung kann wenige Zehntel mm, jedoch auch mehr als 1,0 mm betragen. Jede Speiche neigt dazu, im Bereich ihrer Verankerungen zu reißen, da in diesem Bereich häufig zusätzliche Biegekräfte auftreten und die Speiche darüber hinaus beispielsweise durch ein Gewinde in ihrem Kerndurchmesser reduziert ist. Durch das Verdicken des Speichenendes wird die Bruchgefahr in diesem Bereich insgesamt erheblich reduziert.

Gemäß einer bevorzugten Ausgestaltung sind die Hohlkammerseitenwände ungefähr V-förmig angeordnet. Die Hohlkammerseitenwände laufen also den Hohlraum verjüngend zur Radmitte hin nach Art eines schräggestellten kursiven V aufeinander zu. Hierdurch wird ein Felgenkörper mit einem großen seitlichen Verankerungsebenen-Versatz und gleichzeitig sehr guten aerodynamischen Eigenschaften geschaffen.

Gemäß einer bevorzugten Ausgestaltung ist an die Speichenöffnung in der Hohlkammerwand anschließend eine Anlageschulter für das Speichenende vorgesehen, an der das Speichenende anliegt und in diesen Bereich eine Biegung von mindestens 1,0° erfährt. Hierdurch wird das Speichenende um mindestens 1,0° in Richtung Mittelebene geneigt gegenüber der übrigen Speichenorientierung. Dadurch wird erreicht, dass die Neigung der Speichen zur Mittelebene größer ist als ohne die Biegung an den Speichenenden. Durch die größere Speichenneigung gegenüber der Mittelebene wird eine größere Stabilisierung der Felge gegenüber seitlichen Querkräften erreicht. Die Verdickung der Speichenenden erstreckt sich über den gesamten Biegebereich des Speichenendes.

Vorzugsweise ist das Verankerungselement eine Gewindemutter, die einen kugelartigen Mehrkantkopf aufweist, der sich mit einem entsprechenden Mehrkantwerkzeug betätigen lässt. Die Speichenenden münden in verschiedenen Winkeln in die Hohlkammer. Das Mehrkantwerkzeug lässt sich in einem weiten Winkelbereich auf den Mehrkantkopf aufsetzen und drehen. Die Verbindung zwischen dem Mehrkantwerkzeug und dem kugelartigen Mehrkantkopf wirkt wie ein Kardangelenk. Auf diese Weise ist die Gewindemutter auch unter den gegebenen engen Platzverhältnissen betätigbar, unabhängig davon, in welchem Winkel sie zum Felgenkörper und damit zu dem eingesteckten Mehrkantwerkzeug steht.

Im folgenden wird unter Bezugnahme auf die Zeichnungen ein Ausführungsbeispiel der Erfindung näher erläutert.

Es zeigen:
- Fig. 1: ein erfindungsgemäßes Fahrrad-Hinterrad im Querschnitt,
- Fg. 2: eine vergrößerte Darstellung eines ersten Querschnittes der Felge des Hinterrades der Fig. 1,
- Fig. 3: eine vergrößerte Darstellung eines zweiten Querschnittes der Felge des Hinterrades der Fig. 1.

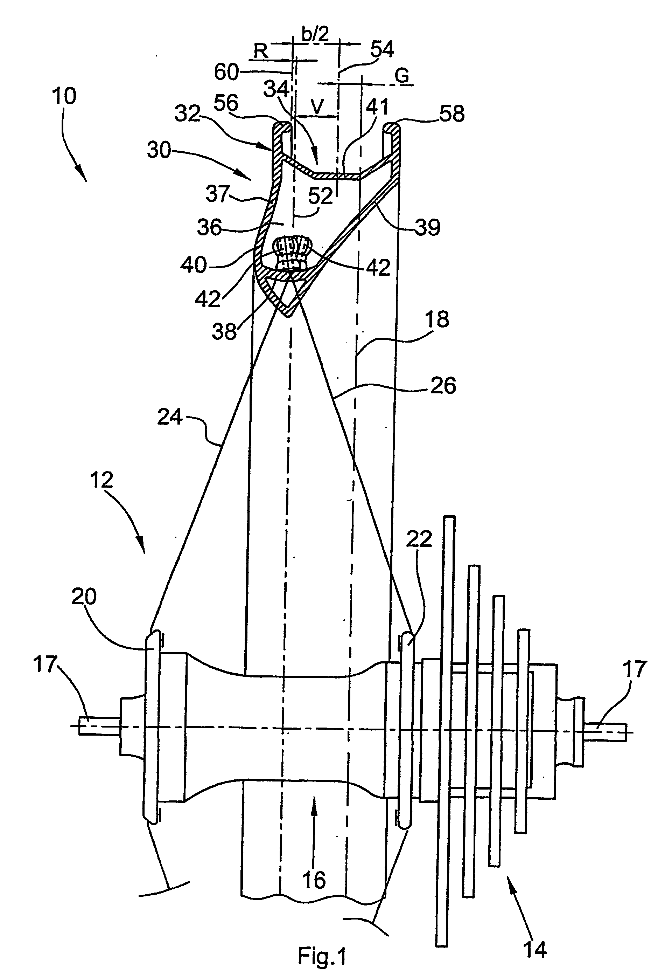

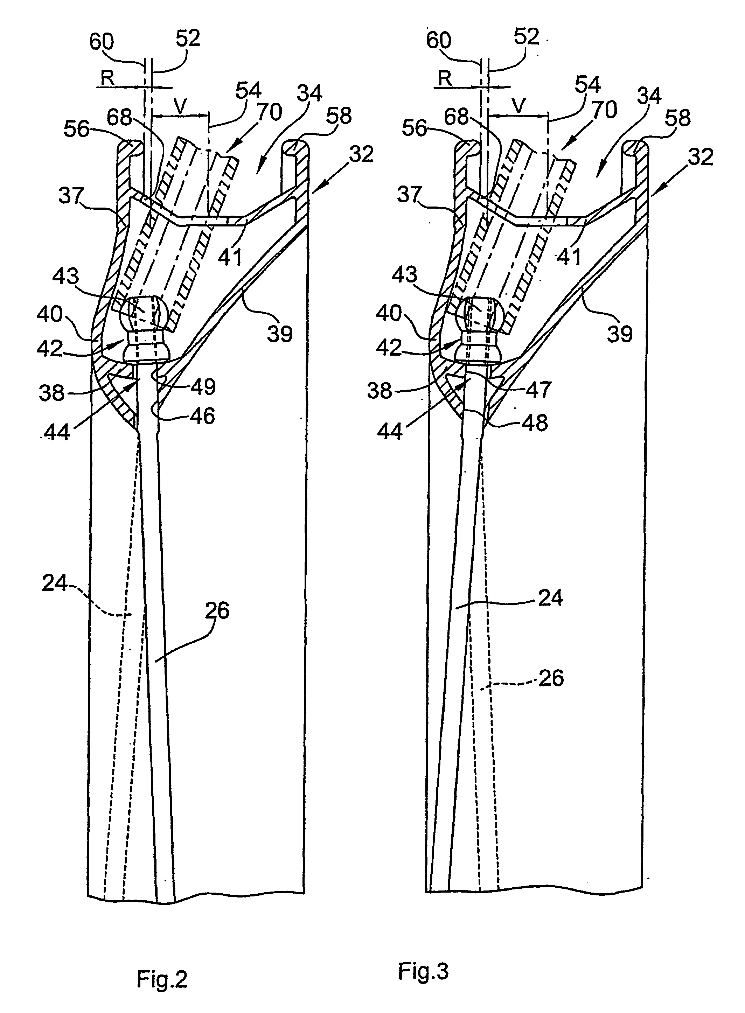

In den Figuren 1 bis 3 ist ein Fahrrad-Hinterrad 10 dargestellt, das an seiner Hinterrad-Achse 12 einen drehbaren Zahnkranzsatz 14 für den Betrieb mit einer Kettenschaltung und eine drehbare Hinterrad-Nabe 16 auf einer feststehenden Hinterachswelle 17 aufweist. Durch den seitlich angeordneten Zahnkranzsatz 14 ist die Hinterrad-Nabe 16 nicht symmetrisch in der Mitte und symmetrisch zur Achsenmittelebene 18 angeordnet, sondern seitlich versetzt zur Achsenmittelebene 18. Die Hinterrad-Nabe 16 weist an beiden axialen Enden jeweils einen Nabenflansch 20,22 auf, der in Form eines umlaufenden radialen Steges ausgebildet ist.

An beiden Nabenflanschen 20,22 sind jeweils eine Vielzahl von Metall-Speichen 24,26 eingehakt, die jeweils ungefähr in einem gleichen Neigungswinkel zur Achsenmittelebene 18 und nach radial außen aufeinander zulaufend angeordnet sind. Von den Speichen 24,26 wird eine kreisrunde Felge 30 gehalten und zentriert.

Die Felge 30 wird von einem unsymmetrischen Felgenkörper 32 gebildet. Der Felgenkörper 32 der Felge 30 umfasst ein symmetrisches Felgenbett 34 zur Aufnahme eines Fahrradschlauches und Fahrradreifens, und eine sich radial innenseitig an das Felgenbett 34 anschließende Hohlkammer 36, die von Hohlkammerwänden 37,38,39 und dem Boden 41 des Feigenbettes 34 gebildet wird.

Die seitlichen Hohlkammerwände 37,39 sind in Form eines kursiven schräggestellten V zueinander angeordnet, so dass die Hohlkammer 36 sich zur Radmitte hin verjüngend ausgebildet ist. Die Hohlkammerbodenwand 38 verschließt das spitz zulaufende radial innere Ende der Hohlkammer 36 und bietet eine ausreichende Fläche zur Fixierung von Verankerungselementen 42 zum Verankern der Speichen 24,26 in der Hohlkammer 36.

Als Verankerungselemente sind Gewindemuttern 42 vorgesehen, die auf ein entsprechendes Außengewinde an den Speichenenden 44 zum Spannen der Speichen 24,26 aufgeschraubt sind. Die als Gewindemuttern 42 ausgebildeten Verankerungselemente ragen vollständig in den Hohlkammer 36 hinein und ragen nicht aus dem Felgenkörper 32 heraus.

Die Speichenenden 44 sind durch entsprechende Speichenöffnungen 46,47 der Hohlkammer-Bodenwand 38 und der Hohlkammer-Seitenwände 37,39 von außen in die Hohlkammer 36 eingesteckt. Für den Zugriff auf die Gewindemuttern 42 sind in dem Felgenboden 41 Zugriffsöffnungen 68 vorgesehen.

Die als Gewindemuttern 42 ausgebildeten Verankerungselemente aller Speichen 24, 26 liegen in einer Verankerungsebene 52, die nicht in der Felgenbett-Mittelebene 54 liegt, sondern die ungefähr im Randbereich des Felgenbettes 34 liegt. Die beiden seitlichen Öffnungsränder des Felgenbettes 34 werden gebildet durch die Felgenhömer 56,58. Der dem Zahnkranzsatz 14 abgewandte Rand des Felgenhorns 56 bildet eine entsprechende Felgenrandebene 60. Der Abstand R zwischen der Felgenrandebene 60 und der Verankerungsebene 52 beträgt ca. 0,5 mm. Der Abstand R zwischen der Felgenrandebene 60 und der Verankerungsebene 52 kann bei anderen erfindungsgemäßen Ausbildungen auch andere Werte annehmen, jedoch ist der Abstand R der Verankerungsebene 52 von der Felgenrandebene 60 in Richtung Zahnkranzsatz 14 nicht größer als 2,0 mm. Dadurch wird ein Felgenversatz V zwischen der Felgenbettmittelebene 54 und der Verankerungsebene 52 realisiert, die sich im Bereich der halben Felgenbettbreite b/2 bewegt.

Die dem Zahnkranzsatz 14 abgewandte Hohlkammer-Seitenwand 37 weist im Bereich der Hohlkammer 36 eine seitliche wülstartige umlaufende Ausstülpung 40 auf. Die Ausstülpungshöhe beträgt ca. 2,5 mm gegenüber der entsprechenden Außenseite des Felgenbettes 34. Durch die wulstartige Ausstülpung 40 wird die Hohlkammer 36 im Bereich der Gewindemuttern 42 auf der dem Zahnkranzsatz 14 abgewandten Seite derart erweitert, dass die Gewindemuttern 42 trotz des starken seitlichen Versatzes V der Verankerungsebene 52 innerhalb des Hohlraumes 36 angeordnet sind und durch ein geeignetes Werkzeug 70 auch betätigt werden können.

Die Gewindemutter 42 weist einen kugelartigen Sechskantkopf 43 auf, der mit dem Innensechskant-Werkzeug 70 nach Art eines Kardangelenkes von dem Speichenende 44 losgeschraubt oder an dem Speichenende 44 festgeschraubt werden kann.

Die Speichenenden 44 sind über eine Länge von ca. 3 cm verdickt gegenüber dem übrigen Speichenbereich. Die Verdickung der Speichenenden 44 liegt bei wenigen Zehntel Millimetern und dient der Speichenverstärkung.

Die Speichenöffnungen 46,48 in den jeweiligen Hohlkammer-Seitenwänden 39,37 und die jeweils korrespondierenden Speichenöffnungen 49,47 in der Hohlkammer-Bodenwand 38 sind miteinander ausgerichtet. Die Ausrichtung ist aber jeweils um 2° bis 3° zu einer Radmittelebene hin geneigt gegenüber der Speichenneigung. Die radial inneren Speichenöffnungen 46,48 bilden auf diese Weise eine Anlageschulter für die Speichenenden 44.

Durch die Anlageschulter wird jede Speiche 24,26 im Bereich des Speichenendes 44 um 2° bis 3° zur Verankerungsebene 52 hin gebogen. Hierdurch wird eine um mehrere Grad vergrößerte Neigung der Speichen 24,26 gegenüber der Verankerungsebene 52 erreicht, wodurch wiederum die Abstützung der Felge 30 in Bezug auf Querkräfte verbessert ist.

Die Hohlkammer-Bodenwand 38 ist innenseitig konkav und die Gewindemutter-Stirnseite entsprechend konvex ausgerundet. Hierdurch wird ein flächiger Sitz der Gewindemutter-Stirnseite auf der Hohlkammer-Bodenwand 38 gewährleistet, unabhängig davon, unter welchem Winkel das Speichenende 44 und damit die Gewindemutter 42 auf der Bodenwand 38 aufsteht. Hierdurch wird ein punktuelles Aufliegen und eine Keilwirkung der Gewindemutter 42 vermieden, so dass ein unerwünschtes Ausreißen der entsprechenden Speichenöffnungen 49,47 ausgeschlossen ist.

Durch das außermittige Anordnen der Verankerungsebene wird der Gesamtversatz G zwischen der Achsenmittelebene 18 und der Felgenbettmittelebene 54 auf ein geringes Maß reduziert, nämlich auf maximal wenige Millimeter. Hierdurch wird eine annähernd achsmittige Position des Felgenbettes 34 und damit des Hinterrad-Reifens realisiert.

## Patentansprüche

1. Fahrrad-Hinterrad mit einer von Speichen (24,26) außermittig gehaltenen Felge (30), die von einem unsymmetrischen Felgenkörper (32) gebildet wird, wobei
der Felgenkörper (32) ein Felgenbett (34) und radial innen davon eine von Hohlkammerwänden (37,38,39) begrenzte Hohlkammer (36) aufweist,
die Speichen (24,26) in der Hohlkammer (36) an einer Hohlkammerwand (38) mit Verankerungselementen (42) befestigt sind, und
alle Verankerungselemente (42) annähernd in einer Verankerungsebene (52) liegen, die zur Felgenbett-Mittelebene (54) seitlich versetzt ist, und
die Verankerungsebene (52) im Randbereich des Felgenbettes (34) liegt, **dadurch gekennzeichnet,**
**dass** eine den Verankerungselementen (42) benachbarte Hohlkammerwand (37) seitlich über das Felgenbett (34) hinausragt.

2. Fahrrad-Hinterrad nach Anspruch 1, **dadurch gekennzeichnet, dass** der Abstand (R) der Verankerungsebene (52) zum Rand des Felgenbettes (34) kleiner als 2,0 mm ist.

3. Fahrrad-Hinterrad nach Anspruch 1 oder 2, **dadurch gekennzeichnet, dass** die Verankerungselemente (42) vollständig in die Hohlkammer (36) hineinragen.

4. Fahrrad-Hinterrad nach einem der Ansprüche 1-3, **dadurch gekennzeichnet, dass** der Felgenbettboden (41) Öffnungen (68) für den Zugriff auf die Speichenenden (44) und die Verankerungselemente (42) in der Hohlkammer (36) aufweist.

5. Fahrrad-Hinterrad nach einem der Ansprüche 1-4, **dadurch gekennzeichnet, dass** die felgenseitigen Speichenenden (44) verdickt gegenüber dem übrigen Speichenbereich sind.

6. Fahrrad-Hinterrad nach einem der Ansprüche 1-5, **dadurch gekennzeichnet, dass** die seitlichen Hohlkammerwände (37,39) ungefähr V-förmig angeordnet sind.

7. Fahrrad-Hinterrad nach einem der Ansprüche 1-6, **dadurch gekennzeichnet, dass** jeder Speiche (24,26) in dem Felgenkörper (32) eine Anlageschulter für ein Speichenende (44) zugeordnet ist.

8. Fahrrad-Hinterrad nach Anspruch 7, **dadurch gekennzeichnet, dass** jedes Speichenende (44) durch die Anlageschulter um mindestens 1,0° in Richtung Mittelebene gebogen ist gegenüber der Speichengrundorientierung.

9. Fahrrad-Hinterrad nach einem der Ansprüche 2-8, **dadurch gekennzeichnet, dass** die Verankerungselemente (42) Gewindemuttern mit einem kugelartigen Mehrkantkopf (43) sind, der sich mit einem entsprechenden Mehrkant-Werkzeug (70) aus verschiedenen Richtungen betätigen lässt.

## Claims

1. Bicycle rear wheel with a rim (30) held eccentrically by spokes (24, 26), the rim being formed by a non-symmetrical rim body (32), wherein
the rim body (32) having a rim channel (34) and a hollow chamber (36) located radially inward thereof and being delimited by hollow chamber walls (37, 38, 39),
in the hollow chamber (36), the spokes (24, 26) are fastened to a hollow chamber wall (38) by anchoring elements (42), and
all anchoring elements (42) approximately lie in one anchoring plane (52) laterally offset with respect to the central plane (54) of the rim channel, and
the anchoring plane (52) is situated in the region of the edge of the rim channel (34),
**characterized in that**
a hollow chamber wall (37) adjacent the anchoring elements (42) projects laterally beyond the rim channel (34).

2. Bicycle rear wheel of claim 1, **characterized in that** the distance (R) of the anchoring plane (52) to the edge of the rim channel (34) is less than 2.0 mm.

3. Bicycle rear wheel of claim 1 or 2, **characterized in that** the anchoring elements (42) project entirely into the hollow chamber (36).

4. Bicycle rear wheel of one of claims 1 to 3, **characterized in that** the rim channel floor (41) has openings (68) for access to the spoke ends (44) and the anchoring elements (42) in the hollow chamber (36).

5. Bicycle rear wheel of one of claims 1 to 4, **characterized in that** the rim-side spoke ends (44) are thickened as compared to the remaining part of the spoke.

6. Bicycle rear wheel of one of claims 1 to 5, **characterized in that** the lateral hollow chamber walls (37, 39) are arranged approximately in V-shape.

7. Bicycle rear wheel of one of claims 1 to 6, **characterized in that**, in the rim body (32), one abutment shoulder for a spoke end (44) is associated to each spoke (24, 26).

8. Bicycle rear wheel of claim 7, **characterized in that** each spoke end (44) is bent by the abutment shoulder by at least 1.0° towards the centre plane relative to the general orientation of the spokes.

9. Bicycle rear wheel of one of claims 1 to 8, **characterized in that** the anchoring elements (42) are threaded nuts with a ball-like polygonal head (43) that can be manipulated from different directions with a corresponding polygonal tool (70).

## Revendications

1. Roue arrière de bicyclette dotée d'une jante (30) retenue de manière excentrée par des rayons (24, 26), laquelle jante est formée par un corps de jante (32) asymétrique,
le corps de jante (32) présentant une base de jante (34) et radialement à l'intérieur de là une cavité (36) limitée par des parois de la cavité (37, 38, 39),
les rayons (24, 26) étant fixés dans la cavité (36) par des éléments d'ancrage (42) sur une paroi de la cavité (38), et
tous les éléments d'ancrage (42) se trouvant à peu près dans un plan d'ancrage (52), qui est décalé latéralement par rapport au plan central de la base de jante (54), et
le plan d'ancrage (52) se trouvant dans la zone limitrophe de la base de jante (34), **caractérisé en ce qu'**une paroi voisine des éléments d'ancrage (42) fait saillie au-dessus de la base de jante (34).

2. Roue arrière de bicyclette selon la revendication 1, **caractérisée en ce que** la distance (R) du plan d'ancrage (52) est inférieure de 2 mm par rapport au bord de la base de jante (34).

3. Roue arrière de bicyclette selon la revendication 1 ou 2, **caractérisée en ce que** les éléments d'ancrage (42) entrent entièrement dans la cavité (36).

4. Roue arrière de bicyclette selon l'une quelconque des revendications 1 à 3, **caractérisée en ce que** le fond de la base de jante (41) présente des ouvertures (68) pour l'accès aux extrémités de rayon (44) et aux éléments d'ancrage (42) dans la cavité (36).

5. Roue arrière de bicyclette selon l'une quelconque des revendications 1 à 4, **caractérisée en ce que** les extrémités de rayon (44) côté jante sont épaissies par rapport à la zone de rayon restante.

6. Roue arrière de bicyclette selon l'une quelconque des revendications 1 à 5, **caractérisée en ce que** les parois latérales de la cavité (37, 39) sont disposées à peu près en forme de V.

7. Roue arrière de bicyclette selon l'une quelconque des revendications 1 à 6, **caractérisée en ce qu'**à chaque rayon (24, 26) dans le corps de jante (32) est associé un épaulement d'appui pour une extrémité de rayon (44).

8. Roue arrière de bicyclette selon la revendication 7, **caractérisée en ce que** chaque extrémité de rayon (44) est pliée par l'épaulement d'appui d'au moins 1° dans la direction du plan central par rapport à l'orientation du fond de rayon.

9. Roue arrière de bicyclette selon l'une quelconque des revendications 2 à 8, **caractérisée en ce que** les éléments d'ancrage (42) sont des écrous filetés dotés d'une tête polygonale sphérique (43), qui peut être actionnée depuis différentes directions par un outil polygonal (70) correspondant.
